# EUROPÄISCHE PATENTSCHRIFT

(11) **EP 1 491 774 B1**
(45) Veröffentlichungstag und Bekanntmachung des Hinweises auf die Patenterteilung: **22.08.2007**
(21) Anmeldenummer: 04014069.1
(22) Anmeldetag: 16.06.2004
(51) Int. Cl.: F16B 12/12

(54) **Formschlüssige Verbindung**
Interlocking connection
Assemblage par liaison de forme

(30) Priorität: 25.06.2003 IT BZ20030035
(43) Veröffentlichungstag der Anmeldung: 29.12.2004
(73) Patentinhaber: GASSER JOSEF & FIGLI SNC DI GASSER JOSEF & C, 39058 Sarentino, (Bolzano) (IT)
(72) Erfinder: Gasser, Gottfried, 39058 Sarentino (BZ) (IT); Gasser, Helmut, 39058 Sarentino (BZ) (IT)
(74) Vertreter: Oberosler, Ludwig

(56) Entgegenhaltungen:
- EP-A- 0 509 894
- CH-A- 483 819
- FR-A- 2 539 827
- US-A- 3 181 923
- US-A- 5 802 798

## Beschreibung

Es sind verschiedene Ausführungen formschlüssiger Verbindungen insbesondere für den Fertigung von Möbeln in Massivholzbauweise bekannt; die bekanntesten sind die Schlitz-Zapfen Verbindungen und die Schwalbenschwanz Verbindungen. Insbesondere für die Herstellung von Möbeln in Massivholzbauweise sind formschlüssige von außen sichtbare Verbindungen entwickelt worden welche dem Möbelstück eine gewisse handwerkliche Wertschätzung verleihen und/oder eine Konstruktion frei von Metallteilen ermöglichen.

Die bekannten formschlüssigen Verbindungen sind in Ihrer Herstellung oft aufwändig, verleihen dem Möbel oder der Struktur oft nicht die nötige Stabilität und/oder die erforderliche Dauerhaftigkeit und sind öfters Beschädigungen durch Abspaltungen ausgesetzt.

Aus der US 3,181,923 ist es bekannt an vertikalen extrudierten Eckstollen von Möbeln, mehrere nach außen offene Längsrillen vorzusehen welche sich über die gesamte Länge der Stollen erstrecken. Diese Längsrillen können wesentlich kreisrunden Querschnitt aufweisen und bilden durch längsverlaufende Lippenpaare eine schmälere Längsöffnung. Diese Längsrillen dienen als Sitze in welche entsprechende Randausformungen welche an Plattenelementen vorgesehen sind eingeführt werden können. Die Anordnung der Längsrillen ist in einem äußeren Ringbereich des Stollenquerschnittes, die Längsrillen sind alle im gleichen Abstand zur Stollen-Längsachse angeordnet und erstrecken sich über die gesamte Stollenlänge. Jede der genannten Längsrillen verfügt über jeweils eine schmälere Längsöffnung. In jede der einzelnen Längsrillen können Plattenelemente eingesetzt werden welche sich alle in der selben Ebene erstrecken. Die Fertigung derart ausgebildete Eckstollen ist wegen ihres mehrfach aufgegliederten Querschnittes nur durch Extrusion sinnvoll, als Werkstoffe kommen also nur Metalle und Kunststoffe in Frage. Das Einsetzen zweier oder mehrerer Plattenelemente oder Bauteile in eine selbe Längsrille wobei die einzelnen Plattenelemente sich in zueinander angewinkelten Ebenen erstrecken ist nicht möglich.

Die Erfindung stellt sich die Aufgabe eine formschlüssige Verbindung für die Holzverarbeitung zu schaffen welche einfach herstellbar ist und eine dauerhafte Verbindung der Teile, sei es mit, als auch ohne Einsatz von Leim und/oder metallischer oder nichtmetallischer Befestigungsmittel, ermöglicht.

Zur Lösung dieser Aufgabe schlägt die Erfindung eine Verbindung vor welche eine formschlüssige Zusammenfügung zwischen einem zylindrischen oder prismatischen Zapfenteil welcher über einen stegförmigen Verbindungsabschnitt mit dem Strukturelement verbunden ist, wobei dieser Abschnitt schmäler als der Durchmesser, bzw. die Diagonale, des Querschnittes des Zapfenteiles ist, und einem Sitz mit geometrisch entsprechender Form vorsieht; welcher im zentralen Bereich des Querschnittes des entsprechenden Bauteiles vorgesehen ist, wobei zwischen den beiden zusammenzufügenden Teilen, links und rechts am stegförmigen Verbindungsabschnitt, zwei ebene Oberflächen vorgesehen sind welche in einer einzigen Ebene liegen und parallel zur Richtung der Zusammenfügung der beiden Elemente liegt, wobei diese Oberfläche in zusammengefügter Position an entsprechenden Oberflächen am Element mit dem entsprechenden Sitz anliegen.

Die zylindrische Form oder die Form mit abgerundetem Querschnitt, bzw. die Form mit quadratischem oder vieleckigem Querschnitt, des Zapfens bewirkt während des Zusammenfügens und nach Abschluss der Zusammenfügung erfindungsgemäß einen Anpressdruck zwischen den ebenen Auflageflächen der beiden verbundenen Elemente wodurch ein dauerhaftes gegenseitiges spielloses Anliegen gesichert wird. Diese Wirkung wird dadurch erzielt, dass das Maß des stegförmigen Teiles des Zapfens, was den Abstand zwischen der Achse des Zapfens und den seitlichen Auflageoberflächen betrifft, etwas kleiner ist als das entsprechende Maß des Sitzes am entsprechenden Element.

Erfindungsgemäß kann der Zapfen, z.B. im Falle des Einsatzes zweier Zapfen in einen einzigen Sitz, in axialer Richtung ein Maß aufweisen welches der Hälfte der Stärke des Elementes entspricht, sodass in zusammengefügter Position die Überlagerung der Zapfen ein Ausmaß einnimmt welches der Stärke eines einzelnen Elementes entspricht. Die Erfindung schließt die Zusammenfügung mehrerer in den selben Sitz eingeführter Zapfen und eventuell auch eine Überlagerung der Zapfen mit Abmaßen welche der Stärke des, mit Zapfen versehenen, Elementes entsprechen oder sich davon unterscheiden, nicht aus. Erfindungsgemäß kann weiters der Zapfen eine kopfseitige Auflagefläche mit einem zweiten, in den selben Sitz eingefügten, Zapfen aufweisen. Diese Auflagefläche liegt vorteilhafterweise in einer Ebene welche sich durch die Winkelhalbierende des Winkels erstreckt welcher von den beiden zusammengefügten, mit Zapfen versehenen, Elementen gebildet wird, die in einen entsprechenden Sitz an einem dritten Element eingesetzt sind.

Gemäß einer Weiterentwicklung des Erfindungsgedankens können die Zapfen und die entsprechenden Sitze konisch, bzw. pyramidenstumpfförmig ausgeführt sein wodurch bei entsprechender Belastung der Verbindung ein Verkeilungseffekt erzielt wird. In bestimmten Anwendungsbereichen kann eine Beschichtung und/oder eine Imprägnierung der Zapfen und/oder der entsprechenden Sitze eine Geräuschbildung bei Belastung/Entlastung der Verbindung vermeiden, bzw. das Gleiten der Verbindungsteile verbessern. Weiters besteht die Möglichkeit durch Einsetzen von Buchsen oder Schichten aus bestimmten Werkstoffen (z.B. Kunststoff, Filz, Kork) zwischen Zapfen und Sitz und/oder an den Anliegeflächen zwischen den Verbindungsteilen Geräuschbildung zu vermeiden und/oder die Gleiteigenschaften zu verbessern.

Die erfindungsgemäße formschlüssige Verbindung bietet sich insbesondere für den Bau von Bettgerüsten, von Tischen oder von Strukturen aus Massivholz an, es wird jedoch nicht die Anwendung an anderen Strukturen aus unterschiedlichen Werkstoffen, wie z. B. für Modulelemente aus Kunststoff für Spielbaukästen, ausgeschlossen.

Die Erfindung wird anschließend anhand einiger in den beigelegten Zeichnungen schematisch dargestellter Ausführungsbeispiele erfindungsgemäßer formschlüssiger Verbindungen näher erklärt, dabei erfüllen die Zeichnungen rein erklärenden nicht beschränkenden Zweck.

Die Fig. 1 ist eine perspektivische Darstellung der Endbereiche dreier Elemente welche unter sich Winkel von 90° bilden und mittels erfindungsgemäßer formschlüssiger Verbindung zusammengefügt sind, die Zapfen haben zylindrische Form, wobei die axiale Ausdehnung der Hälfte der Stärke des Elementes entspricht.

Die Fig. 1a zeigt in Explosionsdarstellung die selben in Fig. 1 dargestellten Elemente.

Die Fig. 2 ist eine perspektivische Darstellung der Endbereiche dreier Elemente welche unter sich Winkel von 90° bilden und mittels erfindungsgemäßer formschlüssiger Verbindung zusammengefügt sind, die Zapfen haben halbzylindrische Form, wobei die axiale Ausdehnung der Stärke des Elementes entspricht und die kopfseitigen Anlageflächen bezüglich der Längsachse des Elementes einen Winkel von 45° bilden.

Die Fig. 2a zeigt in Explosionsdarstellung die selben in Fig. 2 dargestellten Elemente.

Die Fig. 3 ist eine perspektivische Darstellung der Endbereiche von vier Elementen welche unter sich Winkel von 90° bilden und mittels erfindungsgemäßer formschlüssiger Verbindung zusammengefügt sind, die drei Zapfen welche sich axial über ein Drittel der Stärke der Elemente erstrecken sind so angeordnet dass sie in zusammengefügter Position die gesamte Tiefe des einzigen, im zentralen Bereich des Querschnittes angeordneten, Sitzes am vierten Element einnehmen.

Die Fig. 3a zeigt in Explosionsdarstellung die selben in Fig. 3 dargestellten Elemente.

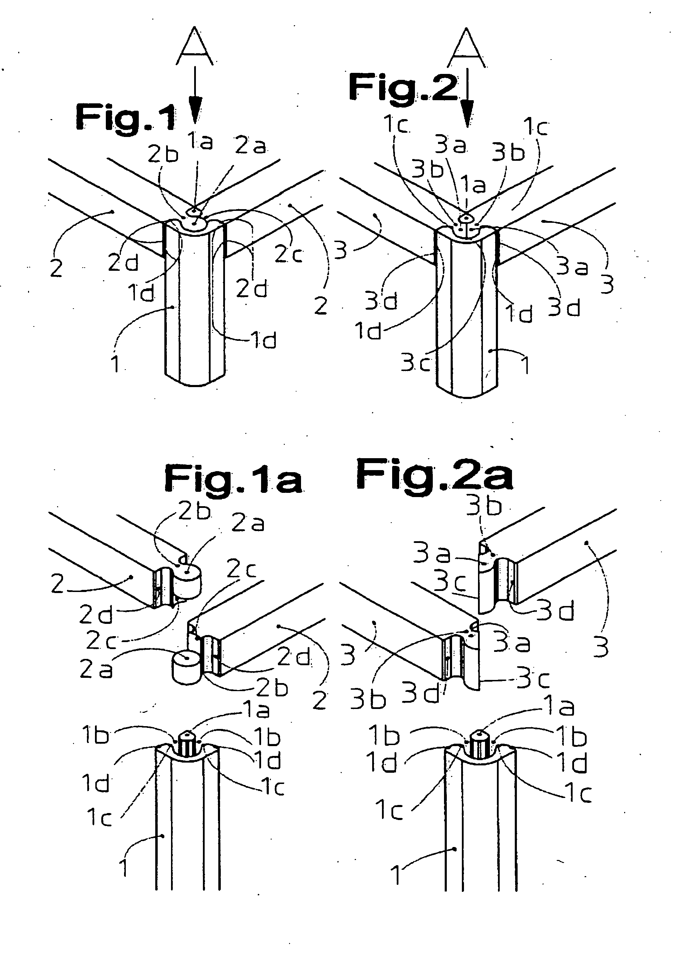

Die Fig. 1, 1 a, 2, 2a können den Eckbereich eines aus Massivholz gefertigten Bettgestelles darstellen, wobei das vertikale Element 1 welches einen einzigen Sitz mit seitlichen Durchlässen 1 b aufweist, einen Stollen des Bettes und die horizontalen Elemente 2 mit den Zapfen 2a, eine Bettwange, bzw. ein Kopfteil, des selben Bettes bilden.

Der Sitz welcher am Ende des vertikalen Elementes 1 eingearbeitet ist besteht aus einem zylindrischen Hohlraum mit mindestens zwei seitlichen Durchlässen 1b um zwei, bzw. mehrere, horizontale Elemente mit zylindrischem Zapfen 2a oder halbzylindrischem Zapfen 3a einsetzen zu können. Entsprechend der Anzahl und der Position der Durchlässe 1 b entstehen vertikale Sprossen 1 a.

Die zylindrischen Zapfen 2a, bzw. die halbzylindrischen Zapfen, sind mit dem Element 2, bzw. mit dem Element 3, über den Verbindungssteg 2b, 3b verbunden welcher, betreffend die Stärke, den Durchlässen 1b entspricht und jedenfalls ein kleineres Ausmaß aufweist als der Durchmesser des Zapfens 2a, 3a, und im Falle eines prismatischen Zapfens, kleiner als die Diagonale des Querschnittes dieses Zapfens ist. In zusammengefügter Position wirken die gekrümmten Oberflächen, bzw. die angewinkelten Oberflächen 1c des Sitzes und der vertikalen Sprossen 1a, auf die entsprechenden gekrümmten Oberflächen, bzw. angewinkelten Oberflächen, der Zapfen 2a, 3a wodurch ein Zurückhalten der komplanaren seitlichen Flächen 2d, 3d des Verbindungssteges 2b, 3b an den entsprechenden Oberflächen 1d des vertikalen, mit Sitz ausgestatteten, Elementes 1 erreicht wird.

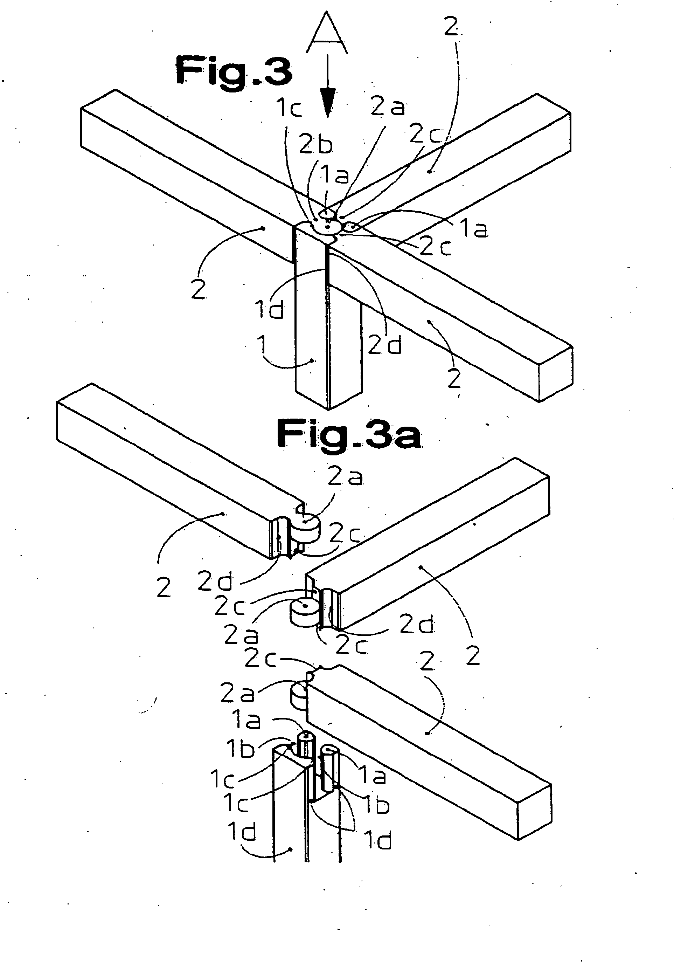

Im Falle des Einfügens zweier oder mehrerer horizontaler Elemente 2, 3 in einen entsprechenden Sitz, nehmen die zylindrischen Zapfen 2a vorzugsweise die Hälfte (Fig. 1, 1a), ein Drittel (Fig. 3, 3a), usw., der axialen Erstreckung des Sitzes ein, wobei Teilbereiche des Verbindungssteges 2c entstehen welche frei vom entsprechenden zylindrische Zapfenteil sind.

Im Falle halbzylindrischer Zapfen 3a (Fig. 2, 2a) weisen diese kopfseitige Kontaktflächen 3c auf welche die Achse beider Zapfen enthalten und vorzugsweise entsprechend der Winkelhalbierenden des von den zwei horizontalen, in einen gemeinsamen Sitz am vertikalen Element 1 eingesetzten Elementen 1, gebildeten Winkels ausgerichtet sind. Diese Ausführung ist in der Praxis für horizontale Elemente 3 nutzbar welche unter sich z.B. Winkel von 90° bis 180° bilden, ohne jedoch z.B. die Anordnung von drei horizontalen Elementen auszuschließen welche unter sich z.B. Winkel von 120° bilden, in diesem letzten Fall werden die zylindrischen Zapfen die Form eines Zwickels mit kreissektorförmigem Querschnitt aufweisen. Die halbzylindrischen oder zwickelförmigen Zapfen 2a haben den Vorteil, dass sie die gesamte oder einen Teil der Tiefenerstreckung des einzigen Sitzes am vertikalen Element 1 einnehmen können.

Die Erfindung schließt nicht aus, dass die Zapfen 2a, 3a Elemente sein können welche eventuell auch aus verschiedenen Werkstoffen hergestellt sind und an den zu verbindenen Elemente 2, 3 angebracht sind. Weiters können die zylindrischen Zapfen 2a und die halbzylindrischen Zapfen 3a mit einer axialen Bohrung versehen sein welche einer koaxialen Bohrung im Sitz, zwecks Einsetzen eines Dübels oder eines anderen Befestigungselementes, entspricht. Natürlich können die Seitenflächen des Verbindungssteges 2b gekrümmt oder geradlinig verlaufen und parallel oder angewinkelt angeordnet sein, die Oberflächen 1 c und jene der vertikalen Sprossen 1a des Sitzes haben, diesen Seitenflächen entsprechenden Verlauf und entsprechende Anordnung.

Die Erfindung schließt weiters die Möglichkeit ein, die Zapfen (2a, 3a) und die entsprechenden im zentralen Bereich des Querschnittes angeordneten Sitze, konisch oder pyramidenstumpfförmig auszubilden. Um eine Geräuschbildung bei Belastung / Entlastung der Verbindung zu verhindern, können die Zapfen (2a, 3a) und/oder die entsprechenden Sitze beschichtet oder imprägniert werden. Weiters ist es möglich zwischen den Zapfen (2a, 3a) und den entsprechenden Sitzen, Buchsen und/oder an den Anliegeflächen (1d, 2d, 3d) Schichten aus anderen Werkstoffen einzusetzen welche geeignet sind eine Geräuschbildung zu vermeiden, bzw. das Gleiten der Teile zu fördern.

## Patentansprüche

1. Formschlüssige Verbindung bestehend aus einem Zapfen (2a, 3a) welcher zylindrische oder prismatische Form hat und mit dem zusammenzufügenden Element (2, 3) über einen Verbindungssteg (2b, 3b) verbunden ist welcher geringere Stärke als das Maß des Durchmessers, bzw. der Diagonale des Zapfens (2a, 3a) aufweist und aus einem Sitz für den genannten Zapfen (2a, 3a) welcher von einer entsprechenden zylindrischen, bzw. prismatischen, Ausnehmung am weiteren zusammenzufügenden Element (1) gebildet wird, **dadurch gekennzeichnet, dass** dieser Sitz im zentralen Bereich des Querschnittes des Elementes (1) vorgesehen ist, dass dieser Sitz mindestens zwei seitliche offene Durchlässe (1 b) aufweist welche der Form und den Ausmaßen des Verbindungssteges (2b, 3b) entsprechen und dass dieser zwei seitliche komplanare Oberflächen (2d) aufweist welche quer zur Längserstreckung des zu verbindenden Elementes (2, 3) verlaufen und den Auflageflächen (1d) entsprechen welche seitlich an den Durchlässen (1b) des mit Sitz ausgestatteten Elementes (1) vorgesehen sind.

2. Formschlüssige Verbindung gemäß Anspruch 1, **dadurch gekennzeichnet, dass**, zwei oder mehrere zusammenzufügende Elemente (2) welche unter sich angewinkelt sind mit ihren zylindrischen oder prismatischen Zapfen (2a) alle in den selben entsprechenden gemeinsamen Sitz am Element (1) eingesetzt sind und dass in diesem Fall die Zapfen (2a) sich über einen Teilbereich der axialen Längserstreckung des Sitzes am Element (1) erstrecken sodass im zusammengefügten Zustand die Summe der axialen Erstreckung der Zapfen (2a) die gesamte axiale Erstreckung des Sitzes ergeben.

3. Formschlüssige Verbindung gemäß Anspruch 1, **dadurch gekennzeichnet, dass** zwei oder mehrere zusammenzufügende zueinander angewinkelte Elemente (3) halbzylindrische oder teilzylindrische Zapfen (3a) mit kreissektorförmigem Querschnitt oder prismatische Zapfen mit unterteiltem Querschnitt aufweisen welche sich axial über die gesamte oder über einen Teil der entsprechenden Stärke der zu verbindenden Elemente (3) erstrecken.

4. Formschlüssige Verbindung gemäß Anspruch 1, **dadurch gekennzeichnet, dass** die Zapfen (2a, 3a) eine koaxiale Bohrung aufweisen welche einer koaxialen Bohrung am Sitz, für die Aufnahme eines Dübels oder eines anderen bekannten Befestigungsmittels, entspricht.

## Claims

1. Positive fitting connection consisting of a stud (2a, 3a) having a cylindrical or prismatic shape, and being connected to the conjoining element (2, 3) via a connecting bridge (2b, 3b), which has a smaller thickness than the measure of the diameter, or of the diagonal of the stud (2a, 3a), and which is embodied by a respective cylindrical, or prismatic seat at the additional conjoining element (1), **characterized in that** this seat is provided within the central area of the cross-section of the element (1), that this seat has at least two lateral open outlets (1b), which correspond to the shape and dimensions of the connecting bridge (2b, 3b), and that it has two lateral coplanar surfaces (2d), which extend laterally toward the longitudinal extension of the element (2, 3) to be connected, and which correspond to the support surfaces (1d), which are provided laterally at the outlets (1b) of the element (1) equipped with the seat.

2. Positive fitting connection according to claim 1, **characterized in that** two or more conjoining elements (2), which are at an angle toward each other, are all inserted with their cylindrical or prismatic stud (2a) in the same respective mutual seat at the element (1), and that in this case the studs (2a) extend across a partial area of the axial longitudinal extension of the seat at the element (1) so that in the assembled state the sum of the axial extension of the studs (2a) makes up the entire axial extension of the seat.

3. Positive fitting connection according to claim 1, **characterized in that** two or more conjoining elements (3), which are at an angle toward each other, have semicylindrical or partially cylindrical studs (3a) with a circular sector-shaped cross-section, or prismatic studs with a subdivided cross-section, which extend axially across the entire, or across part of the respective thickness of the elements (3) to be connected.

4. Positive fitting connection according to claim 1, **characterized in that** the studs (2a, 3a) have a coaxial bore, which corresponds to a coaxial bore in the seat for the receiving of a pin, or another known attachment means.

## Revendications

1. Assemblage par conjugaison de forme, constitué par un tenon (2a, 3a), qui a une forme cylindrique ou prismatique et qui est relié à l'élément (2, 3) à assembler, par l'intermédiaire d'une nervure de liaison (2b, 3b) dont l'épaisseur est inférieure à la valeur du diamètre ou de la diagonale du tenon (2a, 3a), et par un siège dudit tenon (2a, 3a), qui est formé par un évidement correspondant, cylindrique ou prismatique, sur l'autre élément (1) à assembler, **caractérisé en ce que** ledit siège est prévu dans la zone centrale de la section de l'élément (1), **en ce que** ledit siège comporte au moins deux passages (1b) latéraux ouverts, qui correspondent à la forme et à la dimension de la nervure de liaison (2b, 3b), et **en ce que** celle-ci comporte deux surfaces (2d) latérales coplanaires, qui s'étendent transversalement à la dimension longitudinale de l'élément (2, 3) à assembler et correspondent aux surfaces d'appui (1d) qui sont prévues latéralement sur les passages (1b) de l'élément (1) muni du siège.

2. Assemblage par conjugaison de forme selon la revendication 1, **caractérisé en ce que** deux ou plusieurs éléments (2) à assembler, qui sont situés en angle l'un par rapport à l'autre, sont tous insérés avec leur tenon (2a) cylindrique ou prismatique dans le même siège commun correspondant sur l'élément (1) et **en ce que**, dans ce cas, les tenons (2a) s'étendent sur une partie de la dimension longitudinale axiale du siège sur l'élément (1), de telle sorte que, dans la position assemblée, la somme de la dimension axiale des tenons (2a) est égale à l'ensemble de la dimension axiale du siège.

3. Assemblage par conjugaison de forme selon la revendication 1, **caractérisé en ce que** deux ou plusieurs éléments (3) à assembler en angle l'un avec l'autre comportent des tenons (3a) semi-cylindriques ou partiellement cylindriques avec une section en forme de secteur de cercle ou des tenons prismatiques avec une section subdivisée, lesquels s'étendent dans le sens axial sur toute l'épaisseur ou sur une partie de l'épaisseur correspondante des éléments (3) à assembler.

4. Assemblage par conjugaison de forme selon la revendication 1, **caractérisé en ce que** les tenons (2a, 3a) comportent une forure coaxiale qui correspond à une forure coaxiale sur le siège, pour recevoir une cheville ou un autre moyen de fixation connu.
